Europäisches Patentamt

European Patent Office

Office européen des brevets

(11) Publication number: **0 266 990**
**A2**

# (12) EUROPEAN PATENT APPLICATION

(21) Application number: 87309676.2

(22) Date of filing: 02.11.87

(51) Int. Cl.4: **G01K 11/12** , G01K 1/02

(30) Priority: 05.11.86 GB 8626419

(43) Date of publication of application:
**11.05.88 Bulletin 88/19**

(84) Designated Contracting States:
**DE FR IT SE**

(71) Applicant: **PLESSEY OVERSEAS LIMITED**
**Vicarage Lane**
**Ilford Essex IGI 4AQ(GB)**

(72) Inventor: **Mudditt, Michael**
**3 High Kingsbury Close Milborne Port**
**Sherborne Dorset(GB)**
Inventor: **Henning, Michael**
**Ninefields**
**Alhampton Shepton Mallet(GB)**
Inventor: **Pratt, David John**
**34 Testbourne Road**
**Totton Southampton, S04 3FE(GB)**
Inventor: **Wade, Christopher, 17 Ashton Close**
**Beech Grove East Wellow**
**Romsey Hampshire(GB)**
Inventor: **Dakin, John Philip Firview**
**Whinwhistle Road East Wellow**
**Romsey Hampshire(GB)**

(74) Representative: **Nicholson, Ronald**
**Intellectual Property Department The**
**Plessey Company plc 2-60 Vicarage Lane**
**Ilford Essex IG1 4AQ(GB)**

(54) **Improvements relating to bathythermographs or the like.**

(57) A bathythermograph or other instrument for measuring the temperature or some other characteristic of water (e.g. salinity) as a function of depth which comprises a probe for transmitting optical signals over an optical fibre arranged to be unwound from spool means as the instrument is dropped or released into the water to receiving equipment either directly or via further transmitting equipment (e.g. radio transmitting equipment) as the probe moves substantially vertically through the water to provide at the receiving equipment signal data from which a temperature or other water characteristic versus depth profile can be calculated.

FIG. 1.

## IMPROVEMENTS RELATING TO BATHYTHERMOGRAPHS OR THE LIKE

This invention relates to bathythermographs or other instruments for measuring characteristics of sea water (e.g. salinity or sound velocity).

In the case of known constructions of bathythermographs an electrical temperature-responsive sensor probe (e.g. thermistor) is physically and electrically coupled to temperature recording equipment (usually shipborne) by means of two spools or reels of special relatively expensive fine metal wire which unwind when the probe is released into the water enabling the temperature probe to make a substantially vertical descent or ascent followed by a vertical descent in the case of a float-assisted probe released from a submerged vessel.

As the temperature probe descends freely through the water at a known velocity the probe transmits electrical signals to the shipborne temperature recording equipment to provide an indication of water temperature as a function of time or depth from which a temperature versus depth profile can be calculated. As will be appreciated, these temperature probes and the fine metal wires are difficult to recover for further use after paying out of the fine wire from the spools and consequently bathythermographs of this kind are usually regarded as expendible.

One disadvantage of these known bathythermographs apart from the relatively costly fine wire which it is difficult to manufacture is that damage to the wire resulting from breakage, abraiding or stretching can cause the signals from the temperature probe to be lost or distorted, or misleading due to consequential changes in the electrical resistance of the wire.

According to the present invention there is provided a bathythermograph or other instrument for measuring the temperature or some other characteristic of water as a function of water depth comprising a probe for transmitting signals to receiving equipment either directly or via further transmitting equipment (e.g. radio transmitting equipment) as the probe moves substantially vertically through the water to provide at the receiving equipment signal data from which a temperature or other water characteristic versus depth profile can be calculated, characterised in that the signals are transmitted to the receiving equipment over an optical fibre which is initially wound on to spool means from which it unwinds automatically as the spool means and the probe are dropped into the water.

The use of an optical fibre for coupling the probe to the recording equipment (or transmitting equipment) instead of the fine metal wire has the advantage that such fibres are readily available and can easily be protected against damage and strengthened by the provision of selected claddings or coatings. Moreover, optical fibres give improved performance due to the reliability and immunity to electro-magnetic interference.

In carrying out the present invention according to one mode the probe may comprise an electrical temperature-responsive device (e.g. thermistor) which produces electrical outputs that are fed to an electro-optic device for generating corresponding optical signals. These optical signals are then transmitted over an optical fibre to the receiving equipment.

According to another mode of carrying out the present invention the probe comprises a temperature-responsive device embodying means (e.g. fluorescent material) which responds in dependence upon temperature to optical signals transmitted down the optical fibre to the device to produce temperature-dependent optical signals (e.g. fluorescent) which are then transmitted back along the optical fibre to the receiving equipment.

According to yet another mode of carrying out the present invention the probe is itself a length of optical fibre and the distributed temperature along the fibre probe is determined by transmitting light signals along the probe over an uncoiled coupling fibre and then monitoring the back-scattered or returned light in dependence upon time using known optical time domain reflectometry techniques in order to determine the temperature distribution along the optical fibre. The arrangement may make use of Raman back-scattered light or the probe may be doped along its length with material that absorbs light in dependence upon temperature or fluorescent material that produces fluorescence dependent upon the temperature.

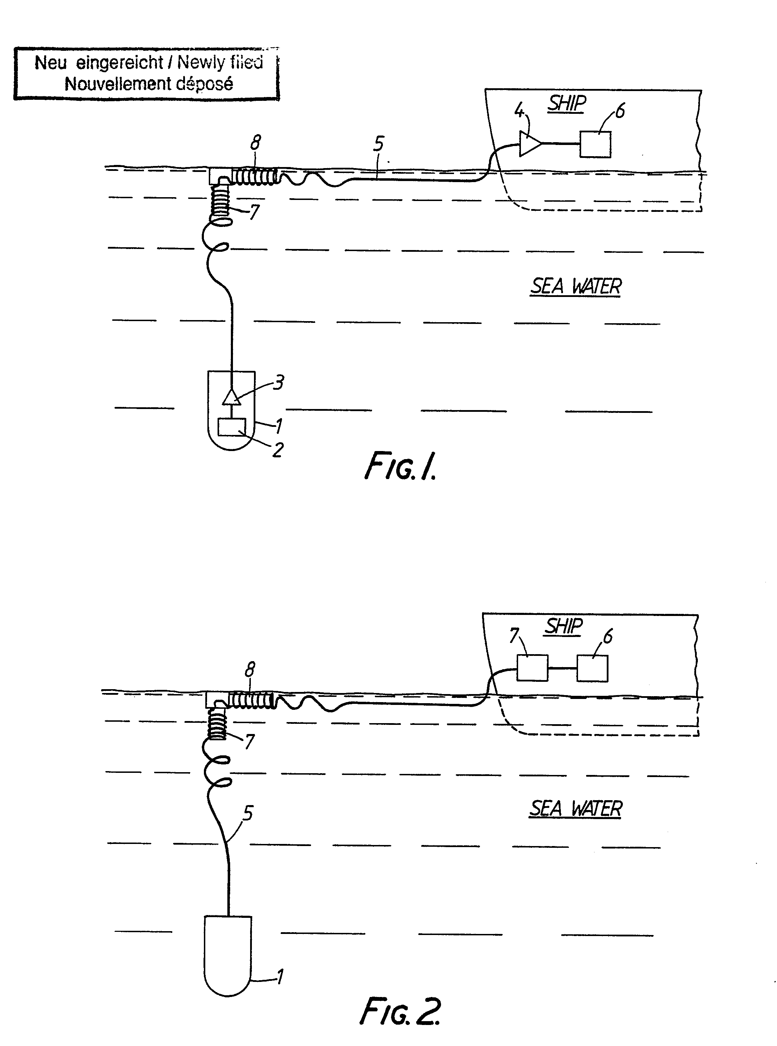

By way of example the present invention will now be described with reference to Figures 1 to 3 of the accompanying drawings which show different embodiments of optical bathythermographs.

Referring to Figure 1, a temperature probe 1 comprising an electrical temperature sensor 2, such as a thermistor, connected to an electro-optical transmitter 3, such as a light-emitting diode, is coupled to a shipborne opto-electric receiver 4 over an optical fibre 5. The electrical output from the receiver 4 is applied to an electrical temperature recorder 6. The optical fibre 5 may be safeguarded against damage during use of the bathythermograph by suitable protective/strengthening coatings applied to it. The optical fibre 5 will be arranged on two reels or spools 7 and 8 so that as the probe 1 is jettisoned or released into the sea the weight of the probe 1 causes the optical fibre to unwind from the spool 7 to allow the probe to descend through the water. At the same time the inertia of the probe 1 causes the optical fibre to unwind from the other spool 8 so that the vessel carrying the optical receiver 4 and recorder 6 may continue to move through the water without pulling the probe 1 with it. The probe 1 can therefore descend substantially vertically through the water and in so doing the electrical temperature sensor 1 produces time-dependent variable electrical outputs according to the temperature profile of the water along its path of descent. This electrical signal is fed to the optical transmitter 3 which converts the variable electrical signal into a corresponding variable optical signal which propagates along the uncoiled optical fibre 5 to the optical receiver 4 which converts the optical signal back into electrical signals for operating the recorder 6. The recorder 6 thus produces a record of the temperature distribution or profile through the sea water.

Referring now to Figure 2 of the drawings this shows a bathythermograph similar to Figure 1 but in which the probe 1 comprises a device including fluorescent material which fluoresces in response to optical signals transmitted to it over the optical fibre 5 from a control unit 7. The degree of fluorescence and thus the intensity of fluorescent light transmitted back along the optical fibre 5 to the control unit 7 and recorder 6 is dependent upon the temperature of the water. Consequently, as the probe 1 descends substantially vertically through the water as facilitated by uncoiling of the optical fibre from the spools 7 and 8 the probe produces variable intensity fluorescent signals corresponding to the temperature/depth profile through the water. This variable fluorescent signal is converted by the control unit 7 into a variable electrical signal which is then fed to the recorder 6.

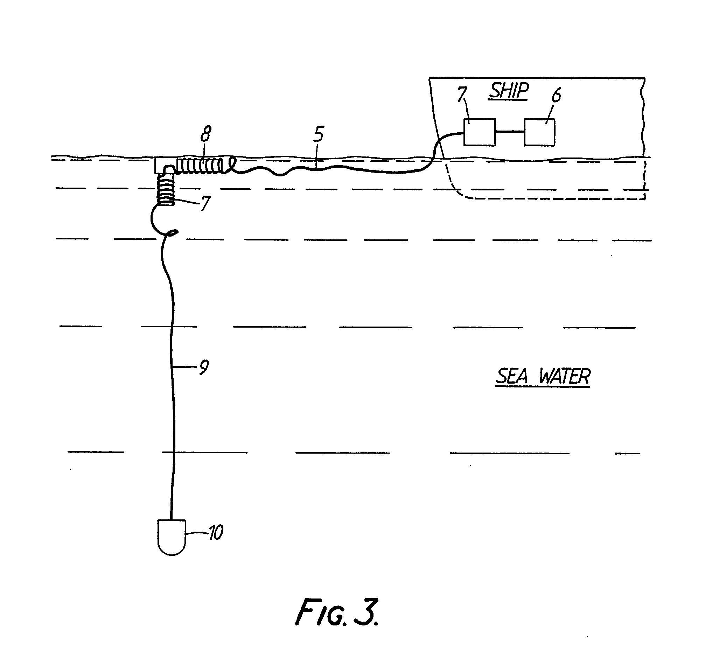

Referring finally to Figure 3, in this embodiment the probe, instead of being a device for detecting the temperature at a particular point in the descent of the probe, comprises a length of optical fibre 9 which is optically and physically coupled to the control unit 7 by means of the optical fibre 5. In this case, to facilitate unwinding of the coupling fibre 5 a suitable weight 10 may be attached to the end of the sensor fibre 9 so that the sensor fibre may take up a vertical position as shown whereby the temperature distribution down the fibre may be determined to provide a temperature/depth profile indication in the recorder.

In this embodiment the temperature distribution may be determined by transmitting light signals down the sensor fibre 9 and then measuring with respect to time the back-scattered light at the Raman wavelengths. Pulse signals of two different frequencies may be transmitted down the fibre sensor 9.

Alternatively, the fibre sensor 9 may be doped along its length with a dopant which absorbs light according to the temperature of the fibre so that the light reflected back along the fibre with respect to time will vary according to the absorbtion of light or temperature of the fibre at distributed points therealong.

Still further, the optical fibre 9 may be doped with a fluorescent material which fluoresces when light impinges thereon according to the temperature of the material. Thus the fluorescent light returning down the fibre 9 with respect to time to the optical control unit 7 provides an indication of the temperature distribution along the sensor. This optical signal is then converted into an electrical signal which is applied to the recorder 6 for producing a temperature/depth profile of the sea.

Optical time domain reflectometry techniques of the kind just referred to are described in our co-pending patent applications Nos. 2140554A and 2156513A.

Although in the foregoing description of embodiments of the present invention bathythermographs have been specifically described it will be appreciated that the salinity of sea water or the velocity of sound could alternatively be measured over a depth of water by the choice of a suitable probe which provides an optical output dependent upon such characteristics. Moreover, in the case of instruments according to the invention released from submarines or other submerged vessels then the probe may be attached to a float which first carries the probe to the water surface before the probe makes its vertical descent through the water for temperature measurement purposes. It may here be mentioned that the descent of the probe rather than the ascent is utilised since the speed of descent is more uniform and predictable than the speed of ascent of the probe under the action of the float.

Still further, the instrument could be dropped into the sea from an aircraft in which case a single spool of optical fibre would be provided to allow for the vertical descent of the probe with optical signals being transmitted to a radio transmitter on the surface of the water which transmits radio signals corresponding to the temperature/depth optical signals received from the probe and received by the aircraft or other receiving station.

Since coated optical fibres are considerably more robust and resistant to damage than the delicate fine metal wire used in known bathythermographs as previously described it is envisaged that the probe and optical fibre coupling of bathythermographs according to the present invention will be more readily recoverable in a more re-usable condition and consequently they may not necessarily be considered as expendible devices.

## Claims

1. A bathythermograph or other instrument for measuring the temperature or some other characteristic of water (e.g. salinity) as a function of depth comprising a probe for transmitting signals to receiving equipment either directly or via further transmitting equipment (e.g. radio transmitting equipment) as the probe moves substantially vertically through the water to provide at the receiving equipment signal data from which a temperature or other water characteristic versus depth profile can be calculated, characterised in that the signals are transmitted to the receiving equipment over an optical fibre which is initially wound on to spool means from which it unwinds automatically as the spool means and the probe are dropped or released into the water.

2. A bathythermograph or other instrument as claimed in claim 1, in which the probe comprises an electrical temperature-responsive device which produces electrical outputs that are fed to an electro-optic device for generating corresponding optical signals which are transmitted over the optical fibre to the receiving equipment.

3. A bathythermograph as claimed in claim 1, in which the probe comprises a temperature-responsive device embodying means (e.g. fluorescent material) which responds in dependence upon temperature to optical signals transmitted down the optical fibre to the device to produce temperature-dependent optical signals (e.g. fluorescent) which are then transmitted back along the optical fibre to the receiving equipment.

4. A bathythermograph as claimed in claim 1, in which the probe comprises a length of optical fibre and the distributed temperature along the fibre probe is determined by transmitting light signals along the probe over an uncoiled coupling fibre and then monitoring the back-scattered or returned light in dependence upon time using optical time domain reflectometry techniques in order to determine the temperature distribution along the optical fibre.

5. A bathythermograph as claimed in claim 4, in which the receiving equipment measures Raman back-scattered light.

6. A bathythermograph as claimed in claim 4, in which the probe is doped along its length with material that absorbs light transmitted along the probe fibre from the receiving equipment.

7. A bathythermograph as claimed in claim 4, in which the probe sensor is doped along its length with fluorescent material that produces fluorescence according to temperature as light is transmitted down the optical fibre probe sensor.

8. A bathythermograph or other instrument as claimed in any preceding claim, in which an electrical output from the receiving equipment operates a recorder.

Neu eingereicht / Newly filed
Nouvellement déposé

SHIP

SEA WATER

FIG. 1.

SHIP

SEA WATER

FIG. 2.

BAD ORIGINAL

FIG. 3.